# EUROPEAN PATENT APPLICATION

(11) **EP 1 352 736 A2**
(43) Date of publication of application: **15.10.2003**
(21) Application number: 03008279.6
(22) Date of filing: 09.04.2003
(51) Int. Cl.: B29D 11/00, B29C 33/00

(54) **Stackable contact lens molds**

(30) Priority: 10.04.2002 US 371561 P
(71) Applicant: Novartis AG, 4056 Basel (CH); Novartis Pharma GmbH, 1235 Vienna (AT)
(72) Inventor: Gobron, Stephane, Mount Prospect, IL 60056 (US)
(74) Representative: Gros, Florent

(57) **Abstract**

The invention provides a mold assembly for manufacturing contact lenses. The mold assembly comprises a plurality of identical molds which are stacked one on another. Each pair of neighboring molds cooperate with each other to define a molding cavity having a configuration of a desired contact lens. The present invention also provide a method for casting contact lenses in a mold assembly composed of multiple identical molds that are stacked one on another.

## Description

The present invention is related to molds for casting contact lenses. In particular, the present invention is related to stackable molds which can be used to manufacture contact lenses in a cost-effective fashion. In addition, the present invention provides a method of manufacturing contact lenses using assemblies each composed of a stack of multiple molds of the invention.

It is well known that contact lenses can be used for cosmetics and the correction of visual acuity. The ideal contact lens is one which is not only comfortable to wear for extended periods of time, but also easily manufactured at minimum cost in time and labor.

One advantageous method for manufacturing contact lenses is a cast molding process. Cast molding can reduce production time and cost for the manufacture of contact lenses. Generally, contact lenses are cast molded by depositing a polymerizable lens-forming material in a mold cavity of a mold assembly formed by two mold parts (one first mold section and one second mold section); curing the lens-forming material; disassembling the mold assembly; and removing the lens. The first mold section defines the anterior (convex curvature) surface of a contact lens, and the second mold section defines the posterior (concave curvature) surface of the contact lens.

Each mold section is formed from a mold material by using a molding tool. Although each of these molding tools are used to make hundreds of mold sections, the mold sections are typically used only once in the prior art of cast molding of contact lenses. This increases the time and cost for the manufacturing of contact lenses, especially for a family of contact lenses.

Furthermore, there is environmental concern and relatively-high cost associated with use of mold sections, since the mold sections are typically discarded after the lens has been removed. Although some of the mold materials may be recyclable, significant waste occurs and cost is added to the overall lens manufacturing process.

One object of the invention is to provide a cast molding process that requires a reduced number of sets of molding tools for the manufacture of a family of contact lens.

Another object of the invention is to provide a cast molding process that can reduce waste associated with mold sections.

A further object of the invention is to provide a cast molding process that can reduce the time and cost for the manufacture of contact lenses.

### SUMMARY OF THE INVENTION

The invention, in one aspect, provides stackable molds for manufacturing contact lenses. Each stackable mold includes: a male molding side, an opposite female molding site, and one or more retention means for holding at least two stackable molds together in contact therewith thereby forming a molding cavity. The male molding side comprises a central convex molding surface having a central axis and a first peripheral flange integral with and circumferentially surrounding the convex molding surface. The convex molding surface defines the posterior surface of a desired contact lens. The female molding side comprises a central concave molding surface having a central axis coincidental with the central axis of the convex molding surface and a second peripheral flange integral with and circumferentially surrounding the concave molding surface. The concave molding surface defines the anterior surface of the desired contact lens. The retention means are integrated with and attached to at least one of the first and second peripheral flanges. With the retention means, two stackable molds are held together in a manner so that the concave molding surface of one of the two stackable contact lens molds cooperates with the convex molding surface of the other stackable contact lens mold to define there between a molding cavity having a configuration of the desired contact lens.

The invention, in another aspect, provides a mold assembly for manufacturing contact lenses. The mold assembly comprises a plurality of identical molds which are stacked one on another. Each pair of neighboring molds cooperates with each other to define a molding cavity having a configuration of a desired contact lens. Each mold has a male molding side, an opposite female molding site, and one or more retention means for holding at least two stackable molds together in contact therewith thereby forming a molding cavity. The male molding side of each mold comprises a central convex molding surface having a central axis and a first peripheral flange integral with and circumferentially surrounding the convex molding surface. The convex molding surface defines the posterior surface of a desired contact lens. The female molding side of each mold comprises a central concave molding surface having a central axis coincidental with the central axis of the convex molding surface and a second peripheral flange integral with and circumferentially surrounding the concave molding surface. The concave molding surface defines the anterior surface of the desired contact lens. The retention means are integrated with and attached to at least one of the first and second peripheral flanges of each mold. A pair of neighboring molds is held together with the retention means in a manner so that the concave molding surface of one of the two molds cooperates with the convex molding surface of the other mold to define there between a molding cavity having a configuration of the desired contact lens.

The invention, in a further aspect, provides a method for casting a plurality of contact lenses. The method includes: providing a plurality of the above-described stackable molds; depositing a predetermined amount of lens forming material into the female molding side of each stackable contact lens mold; stacking the plurality of stackable contact lens molds one on another with the male molding side of one mold on top of the female molding side of another mold thereby each pair of neighboring stackable contact lens molds forming one molding cavity containing the lens forming material therein; and curing the lens forming material in each molding cavity.

The present invention provides the foregoing and other features, and the advantages of the invention will become further apparent from the following detailed description of the presently preferred embodiments, read in conjunction with the accompanying figures. The detailed description and figures are merely illustrative of the invention and do not limit the scope of the invention, which is defined by the appended claims and equivalents thereof.

### BRIEF DESCRIPTION OF THE DRAWINGS

A full and enabling disclosure of the present invention, including the best mode thereof, directed to one of ordinary skill in the art, is set forth in the specification, which makes reference to the appended drawings, in which:
Figure 1A is a top elevational view of a stackable contact lens mold according to a preferred embodiment of the present invention.
Figure 1 B is a perspective view of a stackable contact lens mold as shown in Figure 1.
Figure 2 is a cross-sectional view of a stackable contact lens mold as shown in Figure 1.
Figure 3 is a cross-sectional view of an assembly comprising two identical molds shown in Figure 1.
Figure 4A is a partial cross-sectional view of two stackable molds, indicating the line contact of the two molds according to a preferred embodiment of the invention.
Figure 4B is a partial cross-sectional view of two stackable molds, indicating the line contact of the two molds according to a preferred embodiment of the invention.
Figure 5 is a partial cross-sectional view of two stackable molds, indicating the line contact of the two molds according to a preferred embodiment of the invention.
Figure 6 is a partial cross-sectional view of two stackable molds, indicating the line contact of the two molds according to a preferred embodiment of the invention.
Figure 7 is a partial cross-sectional view of two stackable molds, indicating the line contact of the two molds according to a preferred embodiment of the invention.
Figure 8 is a perspective view of a stackable mold having three twist-and-lock fittings according to a preferred embodiment of the invention.
Figure 9 is a perspective view of an assembly comprising a plurality of identical lens molds shown in Figure 4.
Figure 10 is a cross-sectional view of an assembly comprising two identical molds held together by friction fittings.
Figure 11 is a cross-sectional view of an assembly comprising two identical molds held together by ultrasonic welding fixtures.
Figure 12 is a cross-sectional view of an assembly comprising two identical molds held together by three clips.
Repeat use of reference characters in the present specification and drawings is intended to represent same or analogous features or elements of the invention.

### DETAILED DESCRIPTION OF THE PREFERRED EMBODIMENTS

Reference now will be made in detail to the embodiments of the invention. It will be apparent to those skilled in the art that various modifications and variations can be made in the present invention without departing from the scope or spirit of the invention. For instance, features illustrated or described as part of one embodiment, can be used on another embodiment to yield a still further embodiment. Thus, it is intended that the present invention cover such modifications and variations as come within the scope of the appended claims and their equivalents. Other objects, features and aspects of the present invention are disclosed in or are obvious from the following detailed description. It is to be understood by one of ordinary skill in the art that the present discussion is a description of exemplary embodiments only, and is not intended as limiting the broader aspects of the present invention.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well known and commonly employed in the art.

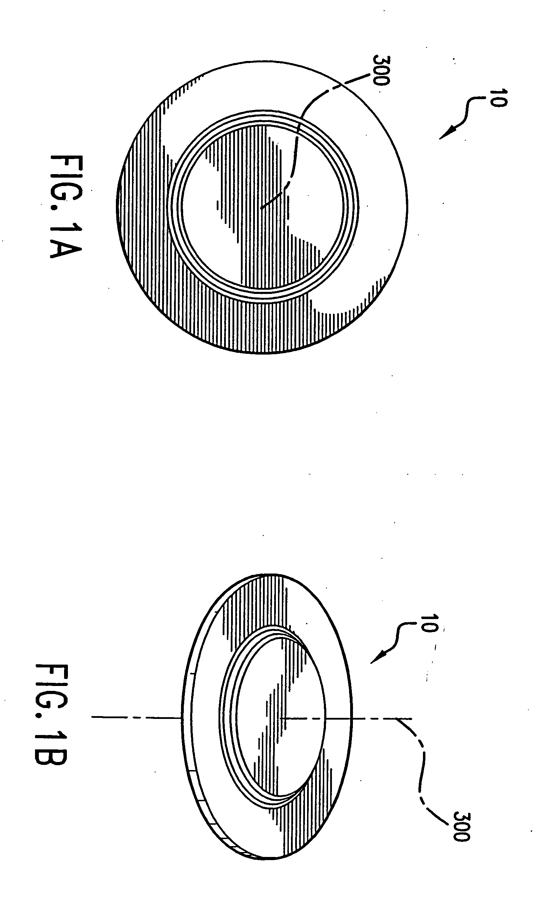

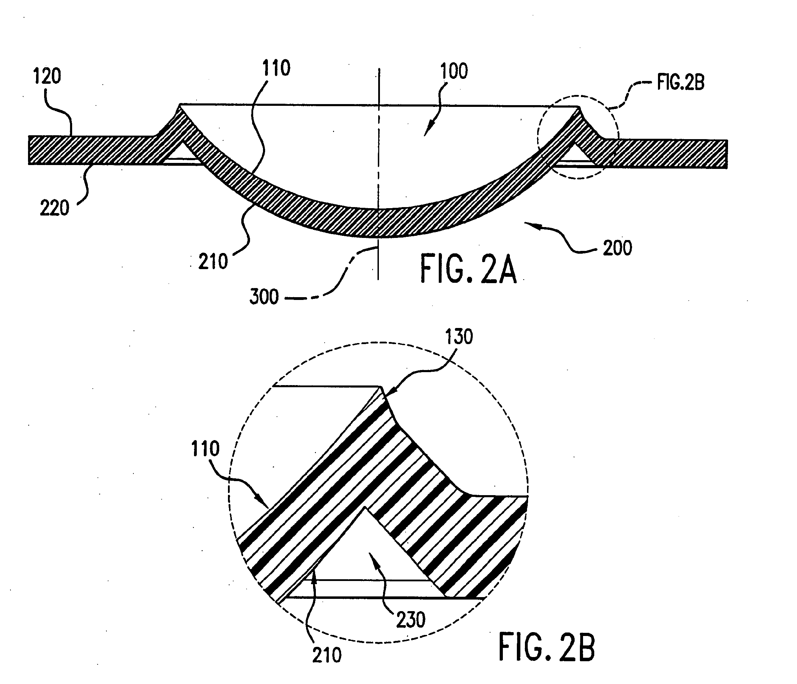

Referring to the drawings in detail, Figures 1-2 illustrate respectively top elevational, perspective, cross-sectional views of one preferred embodiment of a stackable mold **10** useful in the production of a desired contact lens by the polymerization of a lens-forming material in an assembly composed of two or more such molds. The stackable mold **10** is one plastic article comprising a female molding side **100**, an opposite male molding side **200**, and retention means (not shown) for holding together with at least one additional stackable mold.

A contact lens generally has a posterior surface, an opposite anterior surface meeting the posterior surface at an edge, and an axis passing through the apex of the convex surface. The posterior surface has a concave curvature and comprises a first central optical zone. The anterior surface has a convex curvature and comprises a second central optical zone. The combination of the first and second optical zone provides a desired optical power.

The male molding side **200** comprises a central convex molding surface **210** having a central axis **300** and a first peripheral flange **220** integral with and circumferentially surrounding the convex molding surface **210**. The convex molding surface **210** defines the posterior surface of a desired contact lens.

The female molding side **100** comprises a central concave molding surface **110** having a central axis **300** coincidental with the central axis of the convex molding surface **110** and a second peripheral flange **120** integral with and circumferentially surrounding the concave molding surface **110**. The concave molding surface **110** defines the anterior surface of the desired contact lens.

The first and second peripheral flanges **(220, 120)** can have any desired shape. For example, peripheral flanges can be annular or ellipsoidal or the like. In this preferred embodiment shown in Figures 1-2, both the first and second peripheral flanges **(220, 120)** are annular flanges each extending peripherally in a plane normal to the central axis.

The female molding side **110** has a circumferential protuberance **130** located at the junction of the concave molding surface **110** with the second annular peripheral flange **120**. In this preferred embodiment shown in Figures 1-2, the circumferential protuberance **130** is a flexible sharp edge.

The male molding side **210** has a circumferential recess **230** located at the junction of the convex molding surface **210** with the first annular peripheral flange **220.** In this preferred embodiment shown in Figures 1-2, the circumferential protuberance **230** has an approximate V-shape.

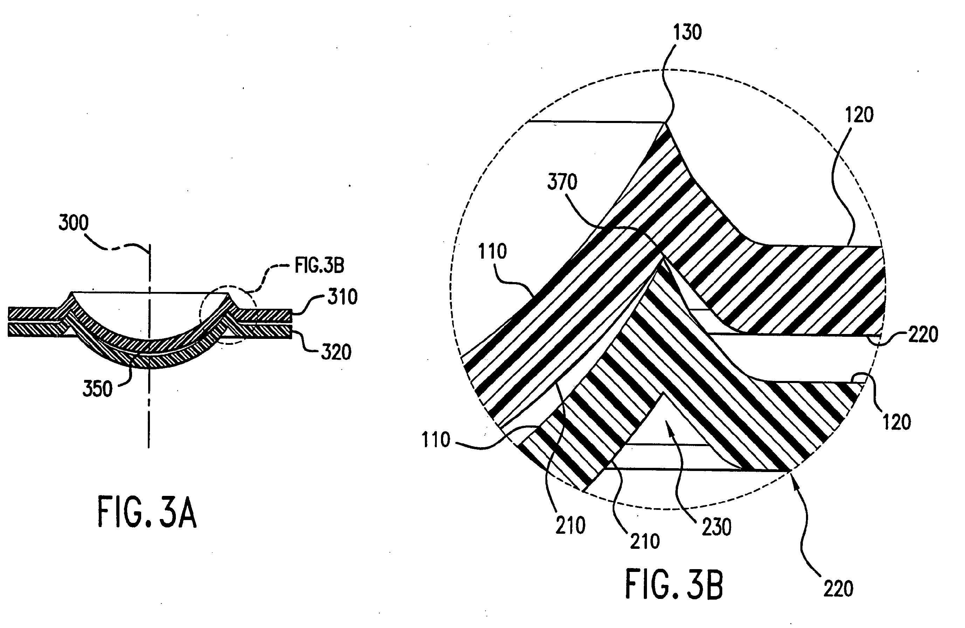

Figure 3 illustrates a cross-sectional view of another preferred embodiment of an assembly composed of two identical above-described stackable molds, a first mold **310** and a second mold **320**. The convex molding surface of the first mold **310** and the concave molding surface of the second mold **320** cooperate with each other to form there between a molding cavity **350** having a configuration of the desired contact lens.

As shown in Figure 3, the diameter of the circumferential flexible sharp edge of the second mold **320** is larger than the diameter at the top of the V-shape recess of the first mold **310**. When the first and the second molds (**310, 320**) assemble together, the flexible sharp edge is bent inwardly and rested on the top of the V-shape recess to define the fluid-tight molding cavity **350**. The molding cavity has a desired edge profile, which is defined by a line contact of the circumferential flexible sharp edge of the second mold **320** with the V-shape recess of the first mold **310** at a predetermined radial position **370.**

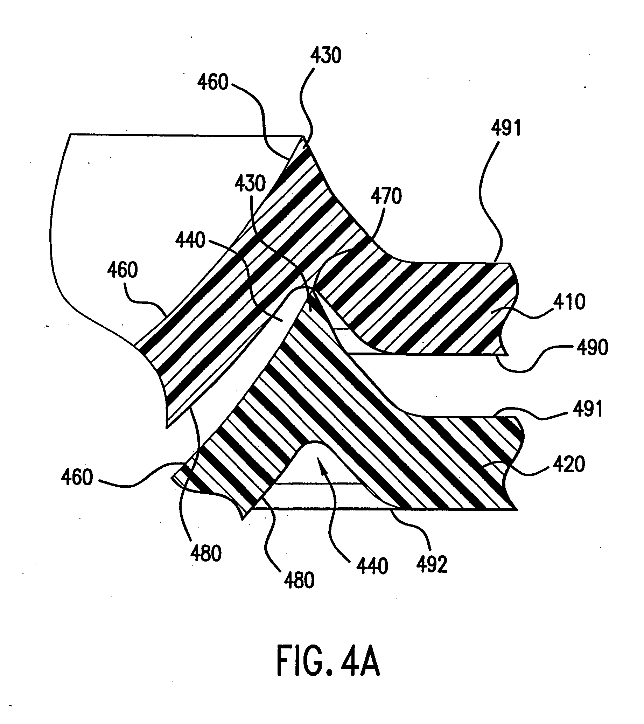

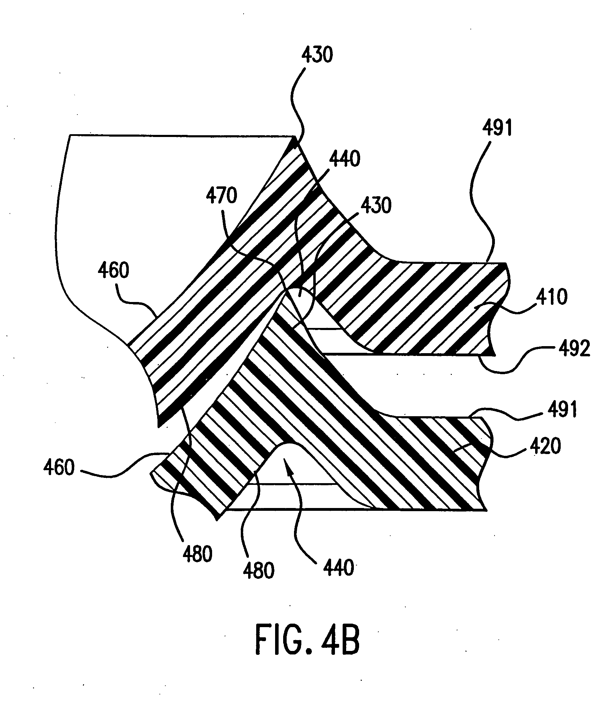

A desired edge profile of the molding cavity between two identical stackable molds can be obtained in any manner that can provide a line contact between two contacting stackable molds. Examples of line contacts between two stackable molds include, but are not limited to, those shown in Figures 4-7.

With reference to Figures 4A and 4B, the female molding side of each stackable mold has a circumferential sharp edge **430**, which is located at the junction of the concave molding surface **460** with the second peripheral flange **491**. The male molding side of each stackable mold has a circumferential concave recess **440**, which is located at the junction of the convex molding surface **480** with the first peripheral flange **492**. When the first mold **410** and the second mold **420** assemble together, the flexible sharp edge **430** of the second mold **420** has a line contact with the concave recess **440** at a predetermined radial position **470** thereby defining a fluid-tight molding cavity.

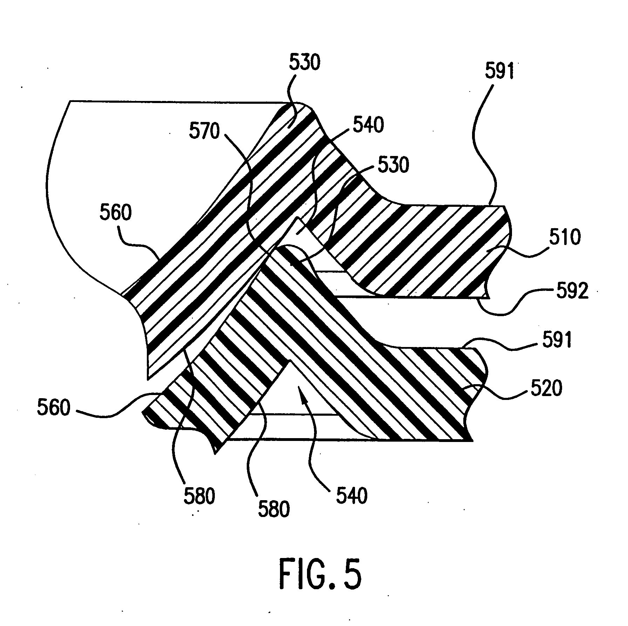

With reference to Figure 5, the female molding side of each stackable mold has a circumferential convex protuberance **530**, which is located at the junction of the concave molding surface **560** with the second peripheral flange **591**. The male molding side of each stackable mold has a circumferential V-shape recess **540**, which is located at the junction of the convex molding surface **580** with the first peripheral flange **592**. When the first mold **510** and the second mold **520** assemble together, the convex protuberance **530** of the second mold **520** has a line contact with the V-shape recess **540** at a predetermined radial position **570** thereby defining a fluid-tight molding cavity.

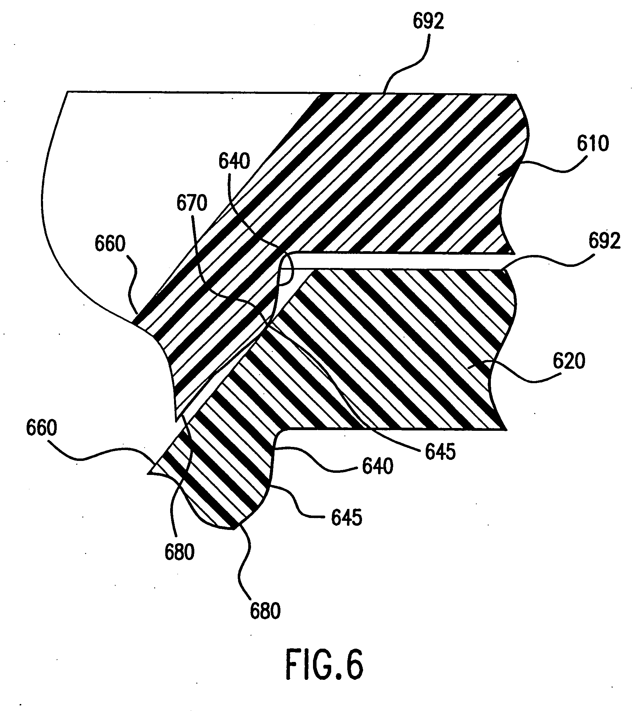

With reference to Figure 6, the male molding side of each stackable mold has a cylindrical surface **640** bridging between the convex molding surface **680** and the first peripheral flange **692**, a contacting edge **645** at the junction of the convex molding surface with the cylindrical surface **640**. When the first mold **610** and the second mold **620** assemble together, the contacting edge **645** of the first mold **610** has a line contact with the concave molding surface **660** of the second mold **620** at a predetermined radial position **670** thereby defining a fluid-tight molding cavity.

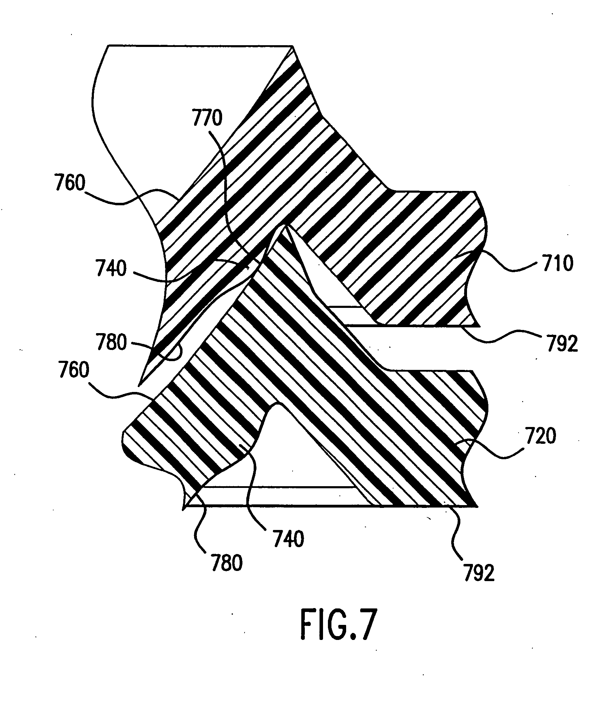

With reference to Figure 7, the male molding side of each stackable mold has a protuberance **740** near the junction of the convex molding surface **780** with the first peripheral flange **792**. When the first mold **710** and the second mold **720** assemble together, the protuberance **740** of the first mold **710** has a line contact with the concave molding surface **760** of the second mold **720** at a predetermined radial position **770** thereby defining a fluid-tight molding cavity.

Two or more stackable molds of the present invention can be stacked one on another to form one molding cavity between each pair of neighboring molds. The stacked molds are held together by retention means which are integrated with and attached to at least one of the first and second peripheral flanges.

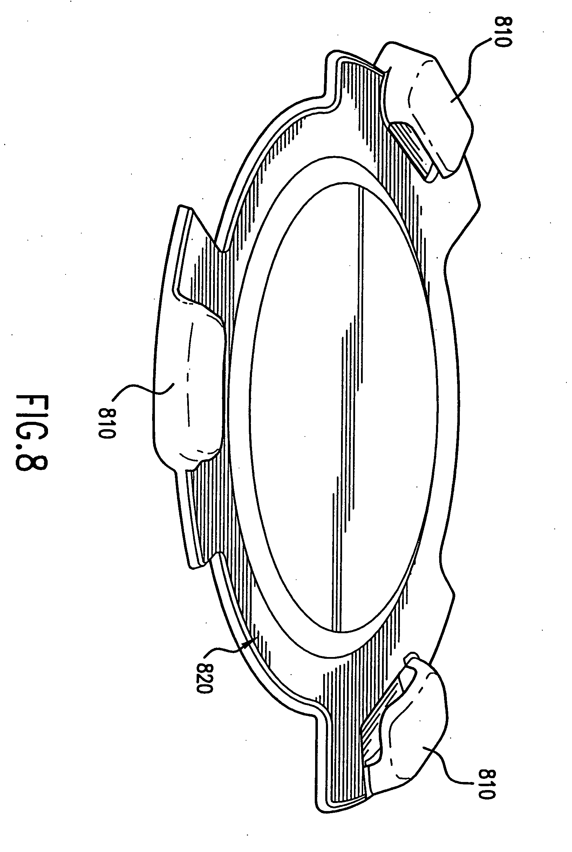

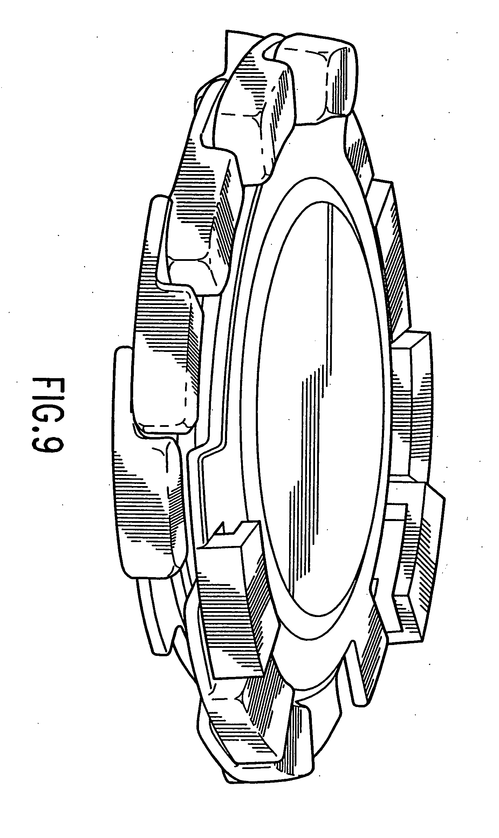

Figures 8-9 illustrate perspective views of an assembly composed of two or more stackable molds, which are held together by three twist-and-lock fittings **810** according to a preferred embodiment. The three twist-and-lock fittings **810** are integral with and attached to the edge of an annular flange **820**. Each pair of twist-and-lock fittings is separated by 120 degree. The annular flange surrounds the central molding surface (convex or concave) and extends peripherally in a plane normal to the central axis of the molding surfaces.

It is to be understood by a person skilled in the art that a stackable mold of the invention can comprises various numbers of twist-and-lock fittings. A stackable mold of the invention comprises preferably 2-9 twist-and-lock fittings, more preferably 3-5 twist-and-lock fittings, even more preferably 3 or 5 twist-and-lock fittings.

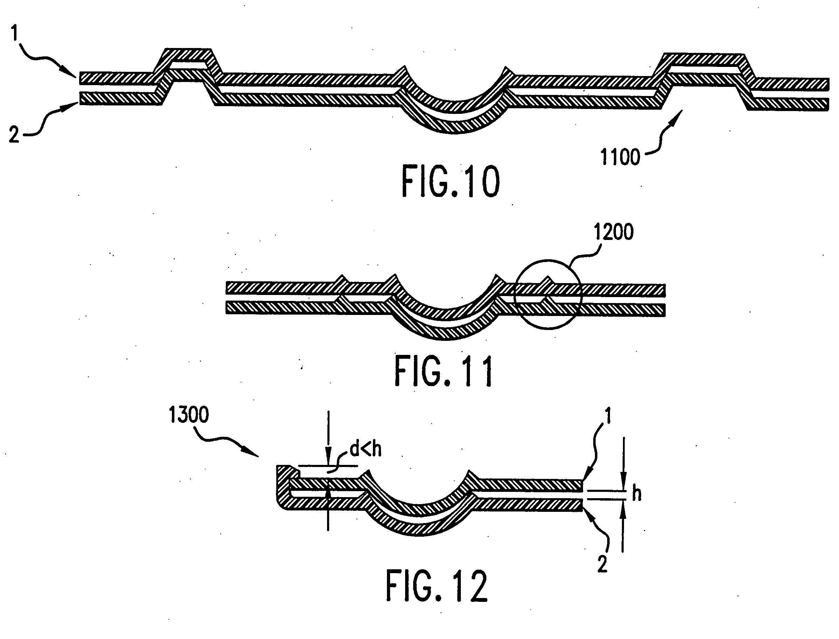

Figures 10-12 illustrate cross-sectional view of another preferred embodiments of the retention means for holding two or more stackable molds together. Figure 10 schematically depicts two stackable molds held together by a circumferential friction fitting **1100** on each mold. Figure 11 shows schematically that two stackable molds can be held together by a circumferential ultrasonic welding fittings **1200**. As shown in Figure 12, the retention means are three clips **1300**, which are integral with and attached to the edge of an annular peripheral flange of each mold. Each pair of clips are separated by 120 degree. It is to be understood by a person skilled in the art that a stackable mold of the invention can comprises different numbers of friction fittings, ultrasonic welding fittings, or clips. For example, a stackable mold can comprises 2-10 discrete friction or ultrasonic welding fittings or clips, which surround the central molding surface. Preferably, all these retention means are located in an annular ring around the central axis of the concave and convex molding surfaces. The number of retention means is preferably 3-5.

Stackable molds of the present invention can be manufactured according to any method known to a person skilled in the art. For example, an optical cutting tool with a numerically controlled lathe may be used to form a set of metallic optical (molding) tool incorporating the all the features of a stackable mold of the invention. This set of optical tool is then used to make stackable molds that are then used to form the lens of the invention using a suitable liquid lens-forming material placed between the molds followed by compression and curing of the lens-forming material.

Stackable molds of the present invention can be manufactured from disposable or recyclable plastic polymeric material. Exemplary materials include, but are not limited to, polyethylene, polypropylene, polystyrene, and PMMA.

There are advantages associated with using stackable molds of the invention in casting contact lenses. First, production cost can be reduced significantly. Cost reduction is realized by reducing (1) the number of sets of molding tools required for the manufacture of a family of contact lens having different optical powers and (2) waste associated with molds used in casting contact lenses. By using stackable molds of the present invention, only one set of optical tools, instead of two, are required for manufacturing one type of stackable molds for casting contact lenses having a specific optical power. By using stackable molds of the present invention, the number of molds is theoretically n+1, in which n is the number of lenses to be manufactured. For example, only 101 stackable molds are required for casting 100 contact lenses. Or, on average, one mold is required for molding one contact lens.

Second, by using stackable molds of the present invention, the prism effect in contact lens manufacturing is minimized through the reduction of external radial positioning errors. Prism effects refer to mismatches of the optical axis of the anterior and posterior surfaces on the lens. In the prior art involving two mold sections, there are two potential sources of radial positioning error, internal and external. Internal errors are due to a mismatch of a considered optical surface with respect to the positioning feature of a mold section. External errors result from a misalignment of two mold sections with respect to each other during fitting together. Stackable molds of the present invention have self-centering nature that can minimize external positioning errors and thereby reduce global radial positioning error.

Another embodiment of the present invention is a method for casting a plurality of contact lenses. The method includes: providing a plurality of the above-described stackable molds; depositing a predetermined amount of lens forming material into the female molding side of each stackable contact lens mold; stacking the plurality of stackable contact lens molds one on another with the male molding side of one mold on top of the female molding side of another mold, thereby each pair of neighboring stackable contact lens molds forming one molding cavity containing the lens forming material therein; and curing the lens forming material in each molding cavity.

Any lens-forming material can be employed in the present invention. The materials may be hydrophilic, or hydrophobic, or mixtures of both. The resulting contact lenses may be hard or soft lenses or soft hydrogel lenses. In particular, when forming a contact lens, the lens material may be an oxygen-permeable material, such as flourine- or siloxane-containing polymer.

In the curing step, a polymerization and/or cross-linking reaction is caused to proceed by the action of heat, radiation or other activation mechanism. After the curing takes place, the molds are separated. The cured contact lens preferably clings in a predetermined way to either the posterior or anterior lens molding surface. The lens is then removed from the molding surface, to which it was preferentially bound, by directly removing the lens from the mold surface. The lens may also be removed from the mold by allowing the lens to free itself from the mold, for example into an hydration tank, after it has been hydrated.

Typically, following the curing step, the polymerized lens is subjected to an extraction treatment and/or hydration with an appropriate solvent, such as for example water (including physiological saline and/or other aqueous solutions). Molded lens is preferably then packaged and sterilized prior to delivery to the consumer for use.

The invention has been described in detail, with particular reference to certain preferred embodiments, in order to enable the reader to practice the invention without undue experimentation. Theories of operation have been offered to better enable the reader to understand the invention, but such theories do not limit the scope of the invention. In addition, a person having ordinary skill in the art will readily recognize that many of the previous components, compositions, and/or parameters may be varied or modified to a reasonable extent without departing from the scope and spirit of the invention. Furthermore, titles, headings, example materials or the like are provided to enhance the reader's comprehension of this document, and should not be read as limiting the scope of the present invention.

## Claims

1. A stackable contact lens mold comprising:
a male molding side having a central convex molding surface having a central axis and a first peripheral flange integral with and circumferentially surrounding the convex molding surface, said convex molding surface defining the posterior surface of a desired contact lens;
an opposite female molding side having a central concave molding surface having a central axis coincidental with the central axis of the convex molding surface and a second peripheral flange integral with and circumferentially surrounding the concave molding surface, said concave molding surface defining the anterior surface of the desired contact lens; and
one or more retention means integral with and attached to at least one of the first and
second peripheral flanges, for holding the stackable contact lens mold together with a second stackable contact lens mold in a manner so that the concave molding surface of one of the two stackable contact lens molds cooperates with the convex molding surface of the other stackable contact lens mold to define there between a molding cavity having a configuration of the desired contact lens.

2. A stackable contact lens mold of claim 1, wherein both the first and second peripheral flange are annular flanges each extending peripherally in a plane normal to the central axis.

3. A stackable contact lens mold of claim 2, wherein the mold comprises from 2 to 10 retention means selected from the group consisting of cooperating snap fittings, twist-and-lock fittings, friction fittings, ultrasonic weldings, clips, hinged clips, and combinations thereof.

4. A stackable contact lens mold of claim 3, wherein the mold comprises 3 to 5 twist-and-lock fittings.

5. A stackable contact lens mold of claim 3, wherein the female molding side has a circumferential protuberance located at the junction of the concave molding surface with the second annular peripheral flange, said circumferential protuberance providing a line contact with the second stackable contact lens mold at a predetermined radial position on the convex molding surface of the second stackable contact lens mold so that the mold cavity has a desired edge profile of the desired contact lens.

6. A stackable contact lens mold of claim 5, wherein the circumferential protuberance is a flexible circumferential sharp edge.

7. A stackable contact lens mold of claim 5, wherein the male molding side has a circumferential recess located at the junction of the convex molding surface with the first annular peripheral flange.

8. A stackable contact lens mold of claim 7, wherein the circumferential recess is a V-shape recess.

9. A stackable contact lens mold of claim 7, wherein the circumferential recess is a concave recess.

10. A stackable contact lens mold of claim 3, wherein the convex molding surface has a circumferential protuberance near the junction of the convex molding surface with the first annular peripheral flange, said circumferential protuberance providing a line contact with the second stackable contact lens mold at a predetermined radial position on the concave molding surface of the second stackable contact lens mold so that the mold cavity has a desired edge profile of the desired contact lens.

11. A mold assembly for manufacturing contact lenses, comprising a plurality of identical molds which are stacked one on another, wherein each pair of neighboring molds cooperate with each other to define a molding cavity having a configuration of a desired contact lens, wherein each mold includes:
a male molding side having a central convex molding surface having a central axis and a first peripheral flange integral with and circumferentially surrounding the convex molding surface, said convex molding surface defining the posterior surface of the desired contact lens;
an opposite female molding side having a central concave molding surface having a central axis coincidental with the central axis of the convex molding surface and a second peripheral flange integral with and circumferentially surrounding the concave molding surface, said concave molding surface defining the anterior surface of the desired contact lens; and
one or more retention means integral with and attached to at least one of the first and
second peripheral flanges, for holding one mold together with at least one neighboring stackable mold in a manner so that the concave molding surface of one of the two neighboring molds cooperates with the convex molding surface of the other mold to define there between the molding cavity.

12. A mold assembly of claim 11, wherein both the first and second peripheral flange of each mold are annular flanges each extending peripherally in a plane normal to the central axis.

13. A mold assembly of claim 12, wherein each mold comprises 2 to 10 the retention means selected from the group consisting of cooperating snap fittings, twist-and-lock fittings, friction fittings, ultrasonic welding fittings, clips, and combinations thereof.

14. A mold assembly of claim 12, wherein each mold comprises 3 to 5 twist-and-lock fittings as retention means.

15. A mold assembly of claim 12, wherein the female molding side of each mold has a circumferential protuberance located at the junction of the concave molding surface with the second annular peripheral flange, said circumferential protuberance providing a line contact with the neighboring mold at a predetermined radial position on the convex molding surface of the neigboring mold so that the molding cavity has a desired edge profile of the desired contact lens.

16. A mold assembly of claim 15, wherein the circumferential protuberance is a flexible circumferential sharp edge.

17. A mold assembly of claim 15, wherein the male molding side has a circumferential recess located at the junction of the convex molding surface with the first annular peripheral flange.

18. A mold assembly of claim 17, wherein the circumferential recess is a V-shape recess.

19. A mold assembly of claim 17, wherein the circumferential recess is a concave recess.

20. A mold assembly of claim 13, wherein the convex molding surface has a circumferential protuberance near the junction of the convex molding surface with the first annular peripheral flange, said circumferential protuberance providing a line contact with the neighboring mold at a predetermined radial position on the concave molding surface of the neighboring mold so that the mold cavity has a desired edge profile of the desired contact lens.

21. A method for casting a plurality of contact lenses, comprising:
providing a plurality of stackable molds, wherein each stackable mold includes
a male molding side having a central convex molding surface having a central axis and a first peripheral flange integral with and circumferentially surrounding the convex molding surface, said convex molding surface defining the posterior surface of a desired contact lens,
an opposite female molding side having a central concave molding surface having a central axis coincidental with the central axis of the concave molding surface and a second peripheral flange integral with and circumferentially surrounding the convex molding surface, said concave molding surface defining the anterior surface of the desired contact lens, and
one or more retention means integral with and attached to at least one of the first and
second peripheral flanges, for holding one stackable mold together with at least one neighboring stackable mold in a manner so that the concave molding surface of one of the two neighboring stackable molds cooperates with the convex molding surface of the other stackable mold to define therebetween a molding cavity having a configuration of the desired contact lens;
depositing a predetermined amount of lens forming material into the female molding side of each stackable contact lens mold;
stacking the plurality of stackable contact lens molds one on another with the male molding side of one mold on top of the female molding side of another mold thereby each pair of neighboring stackable contact lens molds forming one molding cavity containing the lens forming material therein; and
curing the lens forming material in each molding cavity.

22. A method of claim 21, wherein both the first and second peripheral flange of each stackable mold are annular flanges each extending peripherally in a plane normal to the central axis, wherein each mold comprises from 2 to 10 retention means selected from the group consisting of cooperating snap fittings, twist-and-lock fittings, friction fittings, ultrasonic weldings, clips, and combinations thereof.

23. A method of claim 22, wherein each mold comprises 3 to 5 twist-and-lock fittings.

24. A method of claim 22, wherein the female molding side of each mold has a circumferential protuberance located at the junction of the concave molding surface with the second annular peripheral flange, said circumferential protuberance providing a line contact with a neighboring stackable mold at a predetermined radial position on the convex molding surface of the neighboring stackable mold so that the mold cavity has a desired edge profile of the desired contact lens.

25. A method of claim 24, wherein the circumferential protuberance is a flexible circumferential sharp edge.

26. A method of claim 24, wherein the male molding side of each mold has a circumferential recess located at the junction of the convex molding surface with the first annular peripheral flange, wherein the circumferential recess is a V-shape or concave recess.

27. A method of claim 22, wherein the convex molding surface of each mold has a circumferential protuberance near the junction of the convex molding surface with the first annular peripheral flange, said circumferential protuberance providing a line contact with a neighboring stackable mold at a predetermined radial position on the concave molding surface of the neighboring stackable mold so that the mold cavity has a desired edge profile of the desired contact lens.
